# EUROPEAN PATENT SPECIFICATION

(11) **EP 4 607 154 B1**
(45) Date of publication and mention of the grant of the patent: **11.02.2026**
(21) Application number: 25155117.2
(22) Date of filing: 30.01.2025
(51) Int. Cl.: G01F 1/00, E03B 7/07, G01F 15/00, F16K 15/00, E03F 7/04, G01F 1/06

(54) **DEDICATED MONITORING AND REPORTING APPARATUSES FOR A BACKFLOW PREVENTER (BFP) OF A REDUCED PRESSURE ZONE (RPZ) TYPE**
SPEZIFISCHE ÜBERWACHUNGS- UND MELDUNGSVORRICHTUNGEN FÜR EIN RÜCKFLUSSVERHINDERUNGSGERÄT (BFP) DES TYPS MIT REDUZIERTER DRUCKZONE
APPAREILS SPÉCIFIQUES DE SURVEILLANCE ET DE NOTIFICATION POUR UN DISPOSITIF ANTI-REFOULEMENT (BFP) DE TYPE À ZONE DE PRESSION RÉDUITE

(30) Priority: 20.02.2024 IL 31098424
(43) Date of publication of application: 27.08.2025
(73) Proprietor: Cohen, Yogev, 5834041 Holon (IL)
(72) Inventor: Cohen, Yogev, 5834041 Holon (IL)
(74) Representative: Elion IP, S.L.

(56) References cited:
- CN-A- 117 513 485
- JP-A- S5 242 172
- US-A1- 2021 172 157
- US-A1- 2021 332 898

## Description

### FIELD OF THE INVENTION

This invention is in the field of monitoring, supervision, reporting, and monitoring of dedicated control systems using a sensor and an artificial intelligence (AI) processor mounted on a pressure relief valve of a backflow prevention (BFP), for collecting information and analyzing data. The invention is mainly concerned with the supervision and monitoring of the water drained from the pressure relief valve of the BFP due to the specific location of the device on the pressure relief valve. In addition, the invention also allows receiving information that will enable preventive maintenance and predictive maintenance, with continuous monitoring of the operation of the pressure relief valve, as well as detection of a conversion operation (disconnecting the discharge valve in the field), and even identification of the operation of backflow prevention (BFP) devices/apparatuses/systems of a reduced pressure zone (RPZ) type mounted or that are intended to be mounted within drinking water supply systems and other systems that a BFP RPZ is required to be mounted by law or regulation. In further specific embodiments, the invention provides dedicated technological solutions and means that enable protection and optimum and continuous monitoring for public safety and welfare, and environment- and ground- safety, while providing indication regarding the sanitary condition of the BFP alongside early and real-time identification of early-stage occurrences that may cause or lead to water outbreak and possible soil contamination and pollution of groundwater. The invention integrates artificial intelligence (AI) and further provides an additional safety layer designed to identify and characterize various conditions with the potential to cause future damage or harm to the environment and drinking water as well as to the BFP itself, its components, and the pressure discharge valve. The invention also provides an additional layer of safety designed to identify and characterize various situations that may cause damage or future damage to the environment and drinking water.

### BACKGROUND

Infiltration of contaminated water into the soil and drinking water can cause harm to the environment as well as to humans and animals. Water sources' quality is regularly checked at the water sources and along the supply chain. However, the quality of the water along the supply chain may be compromised for several reasons, such as using the water system for introducing fertilizers and pesticides, using non-potable systems, such as heating and firefighting, various commercial and industrial uses, and bad or improper maintenance of the water system, the supply chain, and a backflow preventer (BFP) associated therewith, as well as due to conversion of such BFP and change of purpose thereof, and due to sealing the water discharge opening in the BFP. In some cases, such improper maintenance or modifications can lead to death, depending on the actual risk of the specific water system.

Contamination of water sources can be caused by backflow of the water in the water system or due to hybrid connections: backflow of contaminated water back into the drinking water supply system, which is in the opposite direction to the planned flow direction. Such a situation can be caused, e.g., by a counter-pressure within the system, such as higher pressure at the consumer's side compared to the pressure in the water supply chain, or due to under-pressure (suction), i.e., a situation in which the pressure in the water supply chain drops below atmospheric pressure.

Hybrid connections are connections that create a direct connection between a drinking water system and non-drinking water systems, in which case the BFP is canceled or bypassed.

The requirements for preventing contamination of drinking water supply systems are defined in guidance, regulations, and legislation that determines who must install such BFPs, which types of BFPs need to be installed based on contamination risk level, and periodic maintenance and inspection instructions. Both the installation and inspection of the BFPs require great skill, and those involved in this should be government-certified. For instance, legislation determined that the installation of BFPs is mandatory in businesses, laboratories, farms, barns, and chicken coops as well as in shared houses and private houses that have fire extinguishing systems and gardening that uses fertilizers through the irrigation system.

Two main methods are used to prevent contamination of drinking water: an air gap and a backflow preventer (BFP). An air gap creates a complete separation between the drinking water supply chain and any other system to which it is attached and thereby does not allow any backflow from such other system back into the water supply chain. However, such a method of separation can be implemented in only a few places. Therefore, in most places, protection of the drinking water system is carried out by installing a BFP.

The two common backflow preventers are a backflow preventer with a reduced pressure zone (BFP RPZ) and a backflow preventer with a double unidirectional valve (BFP DUV). Of these two, BFP RPZ is the most common. The BFPs are built from a one-way valve system in which a spring holds them in the normal position and the water pressure causes their position to change. The operation of the valves is affected by a change in the spring force, and by the wear of the valve seals due to the flow of water, which can contain minerals that stick to the seals and prevent the valve from fully closing. Also, particles in the water can prevent the valves from working properly. Since the quality of the drinking water is of the utmost importance, legislation requires periodic inspections (at least once a year) of the BFPs, and the provision of a report on both the inspection and malfunctions. However, such periodic inspections are not enough, since the BFPs can break down after a test whose results are normal and before the next test is performed, and in the meantime, harmful substances will enter the drinking water system without any report thereof.

Other reasons are associated with the BFP itself, which may result in the accumulation of contaminants and dirt within it, which in turn may reduce water quality levels and cause lung damage as well as illnesses, in the short- or long-term. Such BFP-associated reasons may include failure in the one-way valves or seal within the BFP, or due to a malfunction in the discharge valve.

Contamination of water sources may happen when the BFP is not properly maintained or when the BFP malfunctions and does not prevent backflow for any reason, such as breakage of a one-way valve, rupture of a seal/rubber, or accumulation of dirt that prevents adequate closure of the valves. Many times, even when the BFP functions well, dirt and bacteria accumulate inside the BFP due to improper maintenance, which in turn leads to water-quality reduction and eventually to BFP failure.

In high-risk water systems, where the risk of water contamination is very high, special BFPs are used called Reduced Pressure Zone (RPZ) BFPs. Sometimes, a user bypasses, disables, or converts a BFP to avoid regulation or other reasons. This can be done, e.g., by dismantling or disabling the pressure discharge valve, which turns such a BFP RPZ into a simple double unidirectional valve (DUV) BFP, which eliminates its original purpose and opens the possibility of direct contamination in the water system.

US 5,713,240 describes a method and system for performing a remote automatic check of a BFP. The test is carried out by testing the pressure differences between different areas of the BFP. It is not possible to perform the test on an installed BFP because a special installation is needed to allow the test to be performed. Among other things, a flow sensor/meter must be installed at the entrance to the BFP since the test must be done in a situation where there is no water flow between the supply line and the end consumer. To check BFP RPZ, additional water passages must be added along with remote-controlled faucets. Notably, the test proposed is a periodic test and does not give a real-time malfunction report.

IL258895 IL describes a monitoring and reporting device designed to estimate the water loss in the discharge of the water through the pressure relief valve. The device is also adapted to report in real time the flow rate. The device only performs measurement operations and reports only a malfunction or a leak. The device does not interface with an artificial intelligence system and thus cannot identify sources of failure within the system and/or within the device itself. The device also does not check and monitor the quality of the water.

US 2019/135657 describes a device, method and system for monitoring and controlling water quality and flow. The device is designed to monitor water quality, turbidity, pH, and more. The device includes a water meter that upon the detection of water flow can activate a valve to stop the water flow when detecting a malfunction such as a leak. The device is designed to be installed on a water pipe in the water system and not on the pressure relief valve, and as such cannot monitor the sanitary condition in the valve itself or the water passing through the discharge valve. In addition, US 2019/135657 is silent about the possibility of interfacing with an artificial intelligence (AI) system, and it does not have an AI sensor in the discharge valve, and therefore cannot detect disconnection of the pressure reliever, and lacks the ability to generate future forecasts, nor is it capable of performing statistical analyses to identify failures in real-time.

US 2008/150750 describes a meter box for storing a service meter configured to associate a customer service line with a utility service line. Flow control elements at the entrance of the meter box prevent backflow. The meter box is mounted on top of the water system, and is not installed on the pressure relief valve, so it does not monitor the water discharges from the pressure relief valve, nor can it provide information about the state of the pressure relief valve. It does not contain an AI sensor.

US 14/322,833 from 2015 describes a method and system for managing the tests of BFPs. The tests themselves are performed in the field by a qualified technician, who reports the findings so that they can be followed and determined if the tests were performed properly. Notably, this requires a highly skilled technician to decipher the readings of the gauges used to make a correct decision regarding the condition of the BFP.

EP 3222982 describes a liquid leak detector that is both capable of detecting even a very small flow and alert in the case of a strong flow. However, this detector does not measure the amount of water passing through it, and therefore cannot help in monitoring water depreciation, nor does it connect to the BFP RPZ.

EP 2189421 describes a water measuring device intended for water purification systems, which is designed to provide information regarding parts' replacement in the purification system. The device cannot continuously report to a control center about the amount of water passing through it and is not designed to be connected to the BFP RPZ, and thus cannot be used to report water depreciation.

US 2020/355576 describes a test for determining the operating status of a backflow prevention system. Regarding the connection of sensors assembled with the test taps that penetrate the BFP to detect backflow. The test does not know how to detect the monitoring of the water discharges and the drained water passing through the discharge valve of the BFP. Therefore, by using this test it is not possible to know the amount of water that passed through the pressure relief valve, and it is not possible to know whether the discharge valve was disconnected from the BFP. In addition, there is no AI system that can analyze the state of the pressure relief valve and its function in real-time.

US 2021/372096 discloses a BFP for a total water management system, which includes a BFP, an upstream shutoff valve, a downstream shutoff valve, a flow path, a pressure gauge, and a flow meter. The invention deals with a main solution of preventing backflow based on the detection of backflow within the BFP itself, and cutting off the continued supply of water by closing the faucet. However, it does not relate to the monitoring of water discharges and water quality and measuring the water depreciation of the water drained from the pressure relief valve. This is because it is not installed on the outlet of the pressure relief valve. Also, the system does not have an integrated AI sensor on the pressure relief valve, so it does not know how to specifically analyze the condition of the pressure relief valve or its presence on the BFP.

US 2022/195707 provides a device and method for collecting data for determining the state of reflow in a water distribution system. The device and method analyze the state of functioning of the valves inside the BFP, and accordingly determine whether there is a backflow. The device is not installed on the pressure relief valve in the BFP, and therefore does not know how to provide information about the amount of water that passes through the pressure relief valve, nor does it know to provide information about the state of the presence of the pressure reliever over time. Therefore, it cannot warn about the dismantling of the pressure release. In addition, the method does not know to determine whether the quality of the water discharging through the pressure release, is poor, since it is not installed on the pressure release.

Notably, since BFPs are used in every building with a fire extinguishing system, a pressure pump, and a water reservoir, as well as in every agricultural farm that uses materials in their water system, the number of BFPs used is very high. Accordingly, constant supervision (even once a year) of all these BFPs requires large financial resources and takes a long time. Moreover, such supervision must be done by a qualified person, which further adds to the costs and complexity. Furthermore, there is no real-time reporting in the event of a malfunction in the BFPs.

US 2021/332898 provides a system configured to provide communication alerts for a backflow preventer, designed to send alerts regarding tampering with and/or improper operation of the backflow preventer or a component of the backflow preventer, as well as record and track performance measures of at least one backflow preventer. JPS5242172 describes a turbidimeter designed to indicate correct turbidity by removing steam generating from a test water tank by flowing air into the vessel. CN 117513485 provides a water supply system based on water quality pollution level, the system is electrically connected with a water quality detection unit and water pumps, and is used for acquiring the water quality data.

None of the prior art references describes the possibility of placing the sensor at the pressure relief valve. The location of the sensor at the outlet of the pressure relief valve is an essential part of the present invention which enables the monitoring of the water drained from the BFP due to activation of the pressure release following a fault in the water line or in the BFP itself.

Hence, it is necessary to develop a system that will allow continuous monitoring of BFPs, even without the presence of a person, of the normality of the operation of the backflow preventers, and which will also give a real-time alert when there is a malfunction in the BFP or the water supply system, as well as provide data regarding the condition and quality of the water exiting the GFP (e.g. to the ground).

### SUMMARY

In a first aspect, the present invention provides measuring and monitoring device (200) mounted on a pressure relief valve of a backflow preventer with an artificial intelligence (AI) sensor, for continuous supervision and reporting on the operation and condition of a backflow preventer with a reduced pressure zone (BFP RPZ), the device (200) comprises: (a) a measuring and monitoring unit (210) comprising a flow meter, a water collection tank (315), and a turbidimeter; (b) a reporting unit (220) comprising a processor and a memory; and (c) optionally a power source (230), wherein said device (200) is designed to: be connected to a discharged-water exit (130) of said BFP RPZ to receive water discharged from a discharge valve (124) thereof, and collect said discharged water in said collection tank (315); measure the amount and flow rate of the water discharged from the BFP RPZ; measure and monitor the discharged water's condition, quality, and turbidity; and transmit measured data to said reporting unit (220), which is designed to transmit the same to a remote computer that comprises artificial intelligence (AI) designed to analyze all the reports received from the different components of the system. The remote computer and AI are aimed to provide tools for decision-making both in predictive maintenance, for savings needs, and protection of public- and environmentsafety, while providing forecasts and risk management based on scientific analysis and studying the operation of the BFP RPZ, and its function in the water system

In specific embodiments of the above measuring and monitoring device (200), the measuring and monitoring unit (210) further comprises at least one of: a nitrite-sensor and identifier, temperature sensor, pressure sensor, pH-meter, bacteria sensor, viral sensor, fungal sensor, legionella identifier, and shigella identifier.

In certain embodiments of the measuring and monitoring device (200) according to any of the embodiments above, the collection tank (315) is transparent (for enabling turbidity identification using an external turbidimeter).

In certain embodiments of the measuring and monitoring device (200) according to any of the embodiments above, the water's turbidity is determined using both analog and digital turbidimeters.

In certain embodiments of the measuring and monitoring device (200) according to any of the embodiments above, the reporting unit (220) comprises two types of memory: an erasable memory (414) used to save intermediate data and results, and a non-erasable memory (412) which stores software executed on the processor and permanent data (such as the unit's identification number, installation location, etc.).

A Geographic Information System (GIS) is a computer system designed to collect, analyze, manage and present geographic data and spatial information. GIS allows users to combine geographic information with other data, such as demographic, ecological, economic information and more, for decision-making, planning and research. The system includes tools that allow the creation of maps, spatial analyses, filtering and queries on geographic data, presentation of results and various visual models.

In water infrastructure, GIS is used as an essential tool for the management, planning and maintenance of water systems in a smart and efficient way. The system makes it possible to collect, store, analyze and display geographic data that exists in water systems, and provides information in real time, which helps to make better decisions in a variety of fields. In water infrastructure, GIS can be used for, e.g.:
(1) Mapping the water systems: Creating maps of water infrastructure, such as pipelines, pumping stations, water reservoirs and treatment plants, to show the layout of the system in a geographical way;
(2) Management of maintenance and repair operations: using GIS, it is possible to identify problems in water infrastructure (such as leaks in pipes or water quality problems) and plan repairs or upgrades in a targeted and efficient manner;
(3) Future infrastructure planning: GIS makes it possible to plan new projects, identify the expected needs in different areas and plan the layout of pipes and reservoirs accordingly;
(4) Optimizing water flow: GIS analyzes can be used to identify water flow problems, such as areas with a lack of water or overloading existing infrastructure, and suggest solutions;
(5) Real-time analysis: Water infrastructures link to sensing systems (such as water sensors), and thus GIS can display real-time data such as water pressure, water levels in reservoirs, or water pollution; and
(6) Resource management: Helps in efficient management of water resources, including identifying areas with water wastage or suboptimal utilization of resources.

GIS enables to improve the efficiency in the management of the water infrastructures, reduce costs, and prevent faults and errors in the water systems.

Accordingly, in certain embodiments, the measuring and monitoring device (200) according to any of the embodiments above, further comprises or is associated with a GIS, optionally as an integral part of the reporting unit (220).

In certain embodiments of the measuring and monitoring device (200) according to any of the embodiments above, the reporting unit (220) comprises a communication control unit (440) for communicating with a remote computer, near or far (e.g., wirelessly or wirely).

In certain embodiments, the measuring and monitoring device (200) according to any of the embodiments above further comprises a clock or timer (430) associated with said central processor (410) (for, e.g., measuring time differences).

In certain embodiments of the measuring and monitoring device (200) according to any of the embodiments above, the reporting unit (220) is further designed to analyze the data and transmit an analyzed report to said remote computer. In specific embodiments thereof, the reporting unit (220) is designed to send out an alert when the analyzed data is indicative of a possible malfunction in the BFP RPZ.

In certain embodiments of the measuring and monitoring device (200) according to any of the embodiments above, the remote computer is a central monitoring unit (250).

In certain embodiments, the measuring and monitoring device (200) according to any of the embodiments above further comprises a GPS unit or an alert mechanism (such as a proximity sensor) designed to send out an alert to said remote computer when the device (200) is disconnected from the BFP RPZ, thereby preventing the conversion of the device (200) or its unauthorized dismantling from the BFP RPZ.

In certain embodiments, the measuring and monitoring device (200) according to any of the embodiments above further comprises a dedicated attachment mechanism (520) (e.g. a metal band) for connecting said device (200) to said BFP RPZ, wherein said attachment mechanism (520) comprises a GPS unit, or an alert mechanism designed to send out an alert to a remote computer (using, e.g., email or text message) when the device (200) is disconnected from the BFP RPZ, or from a Geographic Information System (GIS).

In the measuring and monitoring device (200), the flow meter is a rotary encoder (320) comprising a turbine (314) with spoon-shaped blades (316), wherein water discharged from the BFP RPZ is accumulated in the spoon-shaped blades (316) and cause rotation of the turbine (314), such that rotation speed of the turbine (314) is equivalent to the amount and speed of water.

In certain embodiments of the measuring and monitoring device (200) according to any of the embodiments above, the device (200) is further configured to measure and monitor water depreciation from said BFP RPZ.

In certain embodiments of the measuring and monitoring device (200) according to any of the embodiments above, the device (200) further comprises or is associated with an electric valve (510) positioned at the BFP RPZ's water inlet (110), wherein said device (200) is configured to close said valve (510) when: (i) a constant, strong flow of water from the BFP RPZ is identified; (ii) a malfunction in the BFP RPZ is identified; (iii) water's turbidity exceeds a predefined threshold; (iv) the water's quality is lower than a predefined threshold; or (v) the nitrite level exceeds a predefined threshold.

In certain embodiments, the measuring and monitoring device (200) according to any of the embodiments above further comprises (as part of its reporting unit (220)) or is associated with an artificial intelligence (AI) designed to analyze data obtained from the measuring and monitoring unit (210).

In a second aspect, the present invention provides a measurement and monitoring system for continuous supervision and reporting on the operation and condition of a backflow preventer with a reduced pressure zone (BFP RPZ), the system comprises: (a) a measuring and monitoring device (200) mounted on a pressure relief valve of a backflow preventer with artificial intelligence (AI) sensor, according to any of the embodiments above; and (b) a central monitoring system (250), wherein said system is designed to continuously measure and monitor both water depreciation from said BFP RPZ as well as quality and turbidity of water discharged from said BFP RPZ, thereby providing real-time alert of a possible malfunction in the BFP RPZ.

In specific embodiments, the above system further comprises an electric valve (510) positioned at the BFP RPZ's water inlet (110), wherein said system is configured to close said valve (510) when: (i) a constant, strong flow of water from the BFP RPZ is identified; (ii) a malfunction in the BFP RPZ is identified; (iii) water's turbidity exceeds a predefined threshold; or (iv) the water's quality is lower than a predefined threshold.

In certain embodiments, the measuring and monitoring system according to any of the embodiments above further comprises an artificial intelligence (AI) designed to analyze data obtained from the measuring and monitoring unit (210), as well as data obtained from an alert mechanism designed to alert when identifying that an attachment mechanism (520) is disconnected from the BFP RPZ.

In a third aspect, the present invention provides a method for continuously measuring, monitoring, supervising, and reporting on the operation and condition of a backflow preventer with a reduced pressure zone (BFP RPZ), the method comprising the steps of connecting a measuring and monitoring device (200) according to any of the embodiments above to a BFP RPZ, and activating same.

The term "condition of the BFP RPZ" as used herein means accumulation of dirt, contaminants, and pollutants, such as chemical hazardous materials or bacteria, within the BFP and/or in the water passing therethrough.

In certain embodiments of the above method, when the device (200) that is mounted on a pressure relief valve of a backflow preventer with an artificial intelligence (AI) sensor, comprises or is associated with an electric valve (510) positioned at the BFP RPZ's water inlet (110), the method further comprises a step of closing said valve (510) when: (i) a constant, strong flow of water from the BFP RPZ is identified; (ii) a malfunction in the BFP RPZ is identified; (iii) water's turbidity exceeds a predefined threshold; (iv) water's quality is lower than a predefined threshold; or (v) nitrite level exceeds a predefined threshold.

### BRIEF DESCRIPTION OF THE DRAWINGS

**Fig. 1** is a cross-section illustration of a backflow preventer with a reduced pressure zone (BFP RPZ).
**Fig. 2** is an illustration of the measurement and monitoring system according to an embodiment of the invention associated with a BFP RPZ.
**Fig. 3** is an illustration of the measurement and monitoring unit according to an embodiment of the invention.
**Fig. 4** is a flowchart illustrating the reporting unit.
**Fig. 5** is an illustration of the measurement and monitoring system according to another embodiment of the invention associated with a BFP RPZ.

### DETAILED DESCRIPTION

The present invention provides a dedicated device/system for continuous monitoring of the water drained from the pressure breaker and automatic testing of a backflow preventer with a reduced pressure zone (BFP RPZ), and reporting any problem and malfunction that could lead to a sanitary or health issue within the BFP and in the drinking water, to water depreciation, and the soil and environment. The present invention provides a solution for locating and identifying the disconnection of the pressure relief valve from the BFP, since the device itself is installed on the pressure relief valve of the BFP and incorporates smart technology and an AI sensor.

The present device/system is designed to be integrated with any BFP that is already installed or that will be installed. The device is based on continuous monitoring of the flow through the discharge valve of the BFP RPZ, from which it is possible to learn about the status/condition of activity and maintenance of the pressure relief valve and the BFP and the turbidity of the water discharged therefrom.

The real-time reporting from the device/system of the invention of the continuous monitoring of the water drained from the pressure reliever and using AI on the pressure reliever, which includes the BFP's location, enables the collection of essential and specific information, and quickly repairing any malfunction while reducing possible damages to the pressure reliever and BFP, the drinking water supply system, and the quality of the drinking water. The report can be given locally to the property owner, to a central body responsible for supervision or the water supplier, to a nearby technician, to anyone else predefined in the system, or even to an external system defined according to need.

In certain embodiments, the real-time reporting is done using a Geographic Information System (GIS) to improve the efficiency and accuracy of data transfer and thereby improving management of the water infrastructures, reduce costs, and prevent faults and errors in the water systems.

Since numerous BFPs are used even in a small area, it is highly important to control and monitor the operation, status, and condition of all BFPs remotely. Using the present system will enable continuous monitoring and thereby significantly reduce the risk of dirt and pollutants accumulation within the pressure discharger and inside the BFP, will reduce the risk of ongoing and accumulating damage to the BFPs and the environment and drinking water, will lead to a reduction in the ongoing maintenance costs of the drinking water quality protection facilities, and will create a new platform for management and control in an important area of this kind and will allow appropriate supervision of the maintenance and sanitary conditions and the health status of each pressure discharger and BFP RPZ.

In addition, the present system will help to identify events using the AI sensor installed on the pressure relief valve. Events in which there is a fear of backflow and discharge of pollutants to the ground by early monitoring various parameters such as the level of turbidity of the water discharged from the discharge valve, as well as to reduce water depreciation and its measurement, by using real-time identification, and reducing many expenses to the property owner or the owner of the BFP.

The new condition will also allow consumers to know precisely the amount of water that was wasted and to request a credit for the water bill, subject to the submission of a BFP's repair bill. This will also lead to raising the level of awareness regarding the handling of the BFP RPZ and performing proper inspections as required, as well as to a better protection and preservation of the environment, soil, and groundwater.

Thus, the present invention serves the common interest of safeguarding public health and the environment and of enforcing the regulations of the Ministry of Health and other appointed bodies responsible for ensuring the quality of drinking water.

The present invention will also provide an answer to internal water systems in private territories, and other systems, for which there is not necessarily a demand for enforcement in the regulations, since they are not defined as a business.

In large complexes and areas where a large number of BFPs are installed, there may be a situation in which there is a failure or malfunction in one or more of said BFPs, which can lead to water pollution or a decrease in water quality and cause damage and sanitary problem, which will also affect the adjacent building under certain situations, and in the absence of proper protection or real-time reporting.

The use of the present system/device for continuous monitoring will enable effectively supervising the condition and operation of the BFP RPZ. This is also in critical situations when it comes to internal systems and water infrastructures of hospitals, where it is very important to maintain the sanitary of water systems to protect the patients' wellbeing.

In addition, the supervision, monitoring, and continuity of the proper functioning of the BFPs is no less important within internal systems and premises of industrial plants that hold various facilities and hazardous materials, which have a significant and complex risk in the environmental and sanitary aspects in a situation of discharge of pollutants into the environment and the ground.

In conclusion, the present invention is essential and, in some cases, may even save lives. For the simplest reason, the BFPs are often installed in pollution centers and in water supply systems that have been defined at a very high level of risk. The location of the monitoring device on the pressure relief valve in the BFP, and the data that will be obtained in real-time and continuous monitoring from using the system in different situations, as well as in the case of vandalism, and in the case of dismantling the pressure relief valve and changing the purpose of the BFP, are information that can lead to the prevention of direct damage and indirect dangers in those pollution centers and systems with a risk level where the BFPs are installed, and where a BFP RPZ is required to be installed. Today, there is no continuous supervision that would allow the learning of the system and the understanding of the behavior pattern of both the BFP and pressure discharge valve in different situations and/or in expected and future situations. The data that will be obtained from the use of the system in various situations, as well as in the case of vandalism, and in the case of dismantling and changing the purpose of the BFP, is information that can lead to breakthrough prevention of direct and indirect dangers in those pollution centers and water systems with a risk level where the BFPs are installed, and where it is required to install a BFP RPZ.

And on the environmental side, the use of the system is also essential, in that it can reduce and prevent further pollution of the environment and the danger of damage to the groundwater due to water and pollutant discharges through the pressure discharger into the environment.

The present invention combined with the AI sensor enables, among others, automatic and continuous testing of the integrity of the pressure relief valve and its existence and the operation of backflow preventers with a reduced pressure zone (BFPs RPZ), sending alerts and reports on each malfunction that can lead, among others, to the contamination of the drinking water or the possible contamination of the environment and soil. The device can be integrated into any BFP RPZ that is already installed or that will be installed.

The real-time reporting and the specific location of the device/system on the pressure reliever while using AI to monitor the water drained from the pressure reliever enables analyzing specific and unique information, and allows the identification and repairing of any fault quickly while reducing damage caused to the drinking water supply system and to the BFP itself. The report received from the system and device can be given locally to the property owner and/or to a central body responsible for the supervision of the water supplier or anyone else. The use of the present device and system is essential to receive real-time notifications from the BFPs for timely maintenance and keeping adequate health requirements within the BFP in terms of monitoring the water passing through the BFP and the pressure discharge valve, as well as to treat water depreciation within the BFP RPZ, wherein the goal is to significantly minimize the ongoing maintenance costs of the drinking water quality protection facilities, and thereby enable the protection of the drinking water quality, while reducing possible damage to the BFP itself and environmental damage to the environment due to discharging of bad water through the pressure discharge valve, which may reach the soil and underground water.

A BFP RPZ contains two unidirectional spring-loaded valves in the water flow direction. A hollow sealed space is present between these two valves, which is referred to as a "reduced pressure zone", wherein the pressure discharge valve is positioned next or underneath it. This discharge valve opens as soon as the water pressure ratio (which is defined and predetermined) changes between the riser and the reduced pressure zone. Whenever there is a problem with the water supply or a malfunction in the BFP, there will be a flow through the discharge valve. The discharged water goes into the ground or the sewer system. The nature of the water flow through the discharge valve can indicate a fault in the water supply system, or a fault in the BFP. The flow through the discharge valve can be of a small force or a large flow force. According to the intensity of the flow and the duration of the flow through the discharge valve, it is possible to diagnose if it is a normal operation of the BFP or if it is malfunctioning. Even if the BFP is operating properly, there may be a problem with the water supply system that needs to be addressed as soon as possible. The discharged water quality and especially its turbidity are essential parameters in determining the BFP condition or maintenance status and/or may indicate that there is a reverse flow of water that is contaminated or contains hazardous material(s) that needs to be immediately examined on site.

The present system comprises a monitoring, measuring, and reporting system that is attached to the BFP RPZ, and a central monitoring unit that handles the data received from the measurement and monitoring unit. The measuring and monitoring unit comprises a power supply unit, a measuring and monitoring unit, and a reporting unit. The measuring and monitoring unit is installed at the discharge valve's water exit and is designed to provide data to the reporting unit about the amount of flow passing through the discharge valve as well as about the turbidity of the discharged water (before it is discharged). The reporting unit processes the measured information and transmits a report to the property owner, to a central monitoring system, to a nearby technician, and/or any other contact person(s) that has been predetermined to receive the report.

The power supply unit can be a fixed battery or a rechargeable battery, or the system may be connected directly to the main power grid. Charging the battery can be done using solar energy or with the help of a dynamo driven by the water flowing in the system, in which case the water-driven dynamo requires installation on the main supply line or a branch thereof.

The measuring and monitoring unit provides continuous information about water passing through it. This unit has a large dynamic measurement range. The preferred structure of the unit is of a turbine with blades which makes a rotary movement when one of the blades is filled with water. When the turbine rotates, the water from each and every blade is transferred to a collection container within the unit where the monitoring of various parameters as well as the turbidity of the water are measured before it is discharged. The movement of the turbine is measured with the help of a rotary encoder that provides an analog voltage or a digital signal on the magnitude of the rotation.

Turbidity can be measured using any known turbidimeter that consists of a fixed light beam, aperture, and detector, which detects the loss of light from the transmitted beam, and the measurement of light scattered onto surrounding detectors. In the presence of suspended and dissolved solids, the light will be scattered, resulting in the detection of light from photodetectors. The higher the concentration of particles or solids, the more light that is scattered, resulting in a higher turbidity measurement.

In certain embodiments, the measuring and monitoring system/device of the invention mounted on the pressure relief valve of the BFP with an AI sensor further comprises a nitrite-sensor and identifier, such as a digital nitrate-nitrogen sensor. Such a sensor can be based on absorbance of NO3-N at 210 nm UV light- when the Spectrometer Nitrate sensor is working, and water flows through a slit therein, light from the light source in the sensor passes through the slit, part of the light is absorbed by the water flowing in the slit, and the other light passes through the water and reaches the other side of the sensor. Then, based on the results, the concentration of nitrate is calculated.

The reporting unit receives data from the measuring and monitoring unit, processes it, and transmits a report and alert in real-time using a text message and/or email to the property owner, the central monitoring unit located at the water supplier, and to a remote computer comprising artificial intelligence (AI), which performs tests and running of the system to find essential information from the database and the accumulated information. The resulting report includes the measurement and monitoring data, forecasts and statistical analysis of a variety of parameters, as well as the information on the exact location of the BFP. The measuring and monitoring unit and the reporting unit enable the initiation of immediate treatment of any discovered problem and continuous monitoring thereof. The reporting unit is built from a microcontroller with appropriate inputs for reading the signals from the measuring and monitoring unit, from a wired or wireless communication unit, and software that processes the input signals to prepare the initial report. Each reporting unit has an ID number that is transmitted along with the reported information. This way it is possible to identify the exact location of each and every BFP.

Using the present device will enable the prevention of the continued accumulation of dirt and contamination within the BFP as well as identifying a possible backflow or contaminants based on the monitoring of the turbidity of the water discharged from the BFP RPZ. In addition, using the present device will significantly reduce water systems' maintenance complexity and high costs, and will increase the consumer's awareness regarding the treatment of his/her own BFP, partially since providing evidence that a BFP malfunctioned and repaired may result in a refund from the water supplier for payment of lost water. Moreover, using the present system will reduce monitoring-time and the manpower required for performing the monitoring, and will enable continuous monitoring (compared to sporadic monitoring as done today). Finally, using the present device/system will result in improved monitoring and enforcement of the control of the BFP itself also by the water supplier. All this and more along with the improvement and maintenance of the drinking water quality and the reduction of water depreciation in the economy, as well as protecting natural resources and environment.

In certain embodiments, the device according to the invention includes or is associated with a Geographic Information System (GIS) to further improve the efficiency and accuracy of data transfer, which thus improves water infrastructures' management, reduce costs, and prevent faults and errors in the water systems.

The invention will now be illustrated by reference to the accompanying drawings which are to be considered only as representative examples of possible embodiments of packages of the invention.

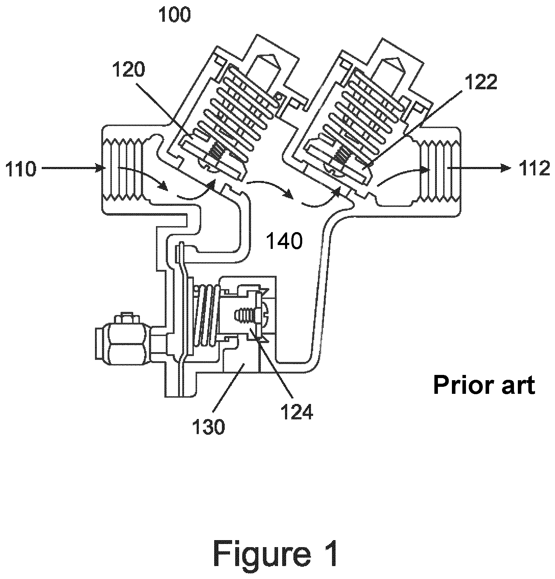

**Fig. 1** illustrates a scheme of a backflow preventer with a reduced pressure zone (BFP RPZ) according to an embodiment of the invention. As illustrated, the BFP RPZ (100) comprises an inlet (110) for receiving water from a water supply network/system, and an outlet (112) through which water exits to the consumer. Between the inlet (110) and outlet (110), resides the reduced pressure zone (140) that comprises two one-way valves (120,122), held by springs in a closed position, and a water discharge valve (124) that is designed to release water from the reduced pressure zone (140) out of the BFP RPZ to the environment (ground or sewer) through a dedicated exit (130). In proper working conditions, the water discharge valve (124) is in a closed mode, and when a water pressure difference is identified (according to predefined parameters), the water discharge valve (124) opens to release water from the BFP RPZ.

The water flow through the discharge valve (124) can be a strong intermittent flow or a constant flow with a weak or strong flow. A strong intermittent flow can be due to fluctuations in the water pressure in the water supply network. The discharge valve (124) discharges water accumulated in the reduced pressure zone (140), and then it closes.

A constant weak flow through the discharge valve (124) can be due to several reasons, such as improper sealing of the first valve (120) when the consumer does not consume water and there is returned water pressure and the second valve (122) leaks. Another reason could be the existence of a leak in the discharge valve itself (124).

A constant strong flow through the discharge valve (124) can be a result of, e.g., a situation in which the first valve (120) is stuck in the open but there is no water consumption by the consumer, which leads to the discharge valve (124) to be fully open to allows releasing large amounts of water.

Alternatively, a weak flow of water through the discharge valve (124) can indicate a problem either in the water supply system or in the BFP RPZ (100), which requires immediate attention and fixing.

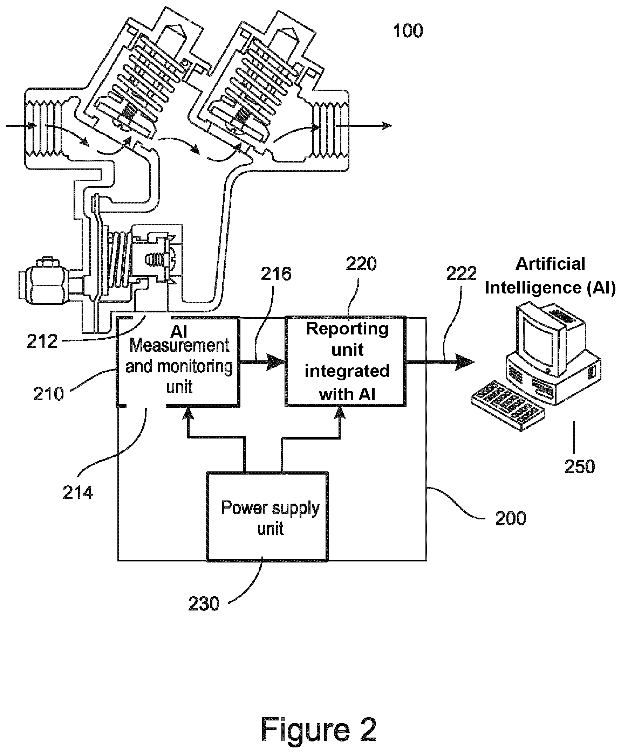

**Fig. 2** illustrates the association of a measurement and monitoring system/device of the invention (200) to a BFP RPZ. As illustrated, the system comprises a measuring and monitoring unit (210), a reporting unit (220), and a central monitoring unit (250) designed to receive data from many reporting units from different BFPs. The measuring and monitoring unit (210), and optionally the reporting unit (220), are physically attached to the BFP RPZ (100) such that water discharging from the BFP's dedicated exit (130) enters the unit (210) via a dedicated inlet (212) before it is discharged to the ground or sewer. It should be noted that the measurement and monitoring device (200) is associated directly with the BFP's discharge exit (130).

As also illustrated, the present measurement and monitoring device (200) or system may further comprise a power supply (230) designed to provide power to the device (200) and its components. Notably, the device (200) may be provided without such a power supply, in which case it will be connected to the main power grid.

After the water in the measuring and monitoring unit (210) has been measured and monitored, e.g., within a dedicated collection tank (315), it exits the unit through an opening (214) to the ground or sewer. The measuring and monitoring unit (210) provides the reporting unit (220) with a signal (216) relative to the amount of water passing through it. It also provides data regarding water quality and turbidity. The reporting unit (220) processes the signal (216) of the measuring and monitoring unit (210) and transmits a report (222) to the central monitoring unit (250) and can also transmit information to the, e.g., owner of the property to which the BFP belongs. The power unit (230) provides the necessary power to the measuring and monitoring unit (210) and reporting unit (220).

The power supply for the measuring and monitoring unit (210) of the invention can be fed from the main power grid if possible. Alternatively, or in addition, the power supply is a power unit (230) that can be a rechargeable battery charged by solar energy, in which case the solar panel may be part of the device (200) or system. Another option for recharging the batteries is the use of a dynamo driven by the flowing water within the water system, in which case the dynamo needs to be integrated into the main supply line. Alternatively, or in addition, the power unit (230) is not a rechargeable battery, which will require periodic replacement thereof by a technician. Another alternative to the power supply is a power unit (230) that comprises regular batteries that can be replaced periodically, e.g., by a technician.

In certain embodiments of the measurement and monitoring device (200) or system, the reporting unit (220) does not process the signal (216) received from the measuring and monitoring unit (210), but merely serves as a transmitter to transmit the signal (216) to the central monitoring unit (250), which does the processing and generates a report that can then be transmitted to, e.g., the owner of the property to which the BFP belongs.

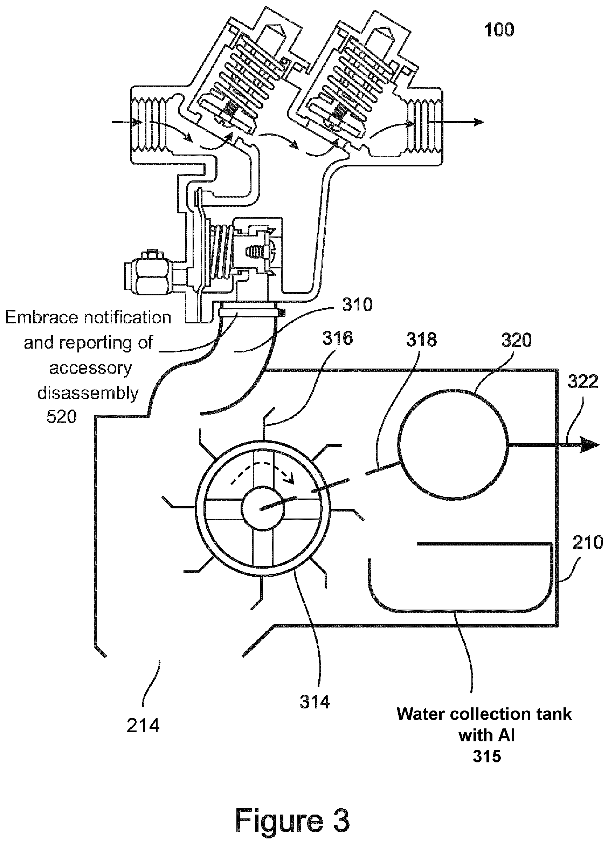

**Fig. 3** illustrates the measuring and monitoring unit (210) according to some embodiments of the invention. Notably, this unit (210) is capable of measuring both very slow and very strong water flows, which means that it has a large dynamic measurement range. As illustrated, the measuring and monitoring unit (210) consists of a wheel/turbine (314) with spoon-shaped blades (316), which makes a rotary movement when the blade(s) is filled with water. When water accumulates in the blade(s), the turbine (314) rotates in a circular motion that leads to the pouring of the water within the spoon-shaped blades (316) into a collection tank (315) for monitoring. As illustrated, the turbine (314) may be connected (318) to a rotary encoder (320) that produces a signal (322) whose magnitude is proportional to the angle of rotation, which is then translated into the amount and speed of water flow. The encoder (320) can output an analog- or a digital-signal. The water coming out of the discharge valve (124) is channeled in such a way that even a light drip will find its way to accumulate on the spoon-shaped blades (316). Notably, the measuring and monitoring unit (210) is designed to measure and monitor even polluted water passing through. The water exiting the outlet (130) of the discharge valve (124) into the unit's inlet (212) is diverted/channeled by one or more guides (310) that ensure that all water drops will reach the spoon-shaped blades (316).

Also illustrated is an attachment mechanism (520) such as a connector or a gripring or metal band. This attachment mechanism (520) is designed to connect the device (200) to the BFP RPZ (100). This attachment mechanism (520) may be equipped with a GPS unit, an alert mechanism or any other anti-tampering mechanism, that is designed to prevent vandalism or intentional removal of the device (200) from the PBF not by a certified technician, and also to send out an alert to, e.g., a remote computer using any suitable way like email or text message, when the device (200) is disconnected from the BFP RPZ (100).

In specific embodiments, the collection tank (315) is transparent/clear to enable monitoring, e.g., the water's turbidity with an external sensor (turbidimeter). Alternatively, the collection tank (315) is opaque/not clear. Turbidity can be measured using any known turbidimeter that can identify, for instance, residues within the water in the tank (315), and the amount and size of particles' content in the water in the tank (315), etc. The measurements can be by any suitable means, such as, but not limited to, a light emitter (e.g. laser or infrared) and light detector that detects the loss and scatter of the transmitted light.

The rotary encoder (320) may be electro-optical that is based on the Hall phenomenon, wherein several small magnets are installed on the circumference of the spoon-shaped blades (316) or turbine (314), whose movement is sensed by a Hall sensor that produces a voltage relative to the change in the magnetic flux. The use of such a rotary encoder (320) allows for a highly sensitive measurement. The rotary encoder (320) with the digital output provides a pulse for any change of a certain magnitude in the angle of rotation. Thus, if the encoder's sensitivity is 360 pulses for a full rotation, then each pulse means a rotation of one degree. Thus, the rate at which the pulses exit the encoder indicates the speed of rotation of the turbine (314) and hence is indicative of the flow rate.

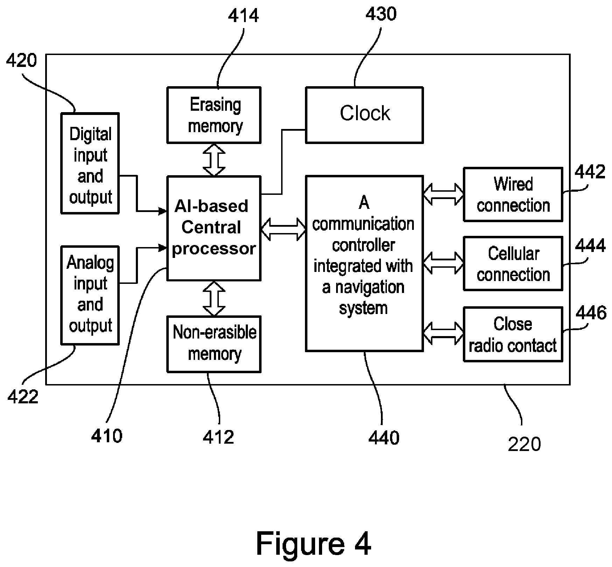

**Fig. 4** illustrates a box diagram of the reporting unit (220) according to an embodiment of the invention, illustrating the central processor (410) to which two types of memory are attached: an erasable memory (414) used to save intermediate results, and a non-erasable memory (412) in which the software executed on the processor is stored as well as permanent data, such as the unit's identification number, installation location, GPS, etc. Also illustrated is a clock (430) associated with the central processor (410), which can be used, e.g., to measure time differences. The central processor (410) is connected to a communication control unit (440) and a GPS, which can communicate with the outside world through any suitable connection, such as a wired connection (442), a cellular connection (444), and a short-range radio connection (e.g., Bluetooth) (446). The landline or cellular connections are used to transmit information to, e.g., a central tracking and monitoring unit (250), the consumer, and the BFP's owner. The short-range radio connection (446) is designed to be used by a technician for, e.g., maintenance of the BFP, and loading and updating software and other parameters (such as location). The central processor (410) receives the signal/ data from the measuring unit either as a digital input (420) or an analog input (422).

During the installation of the system/device (200) of the invention, the installer will be able to upload to the reporting unit (220) various identifying parameters of the facility, such as the type of BFP, its serial number, exact location, etc., as well as associating/ defining a specific technician(s) to which alerts and report are sent. The upload can be either wirelessly or by wirely connecting to the unit and can be done, e.g., using an application on the installer's smartphone or tablet. Additional data that can be uploaded to the unit is the date of the last treatment and/or test performed. Contact with the monitoring and control unit (200) can be initiated by the reporting unit (220), i.e., when a detected malfunction requires treatment, or as part of a periodic check of the system and BFP. Other cases that contact the unit (200) are when the reporting unit (220) initiates a report that includes information on events that occurred during the reporting period, which need attending. The contact can also be initiated by the central monitoring unit (250).

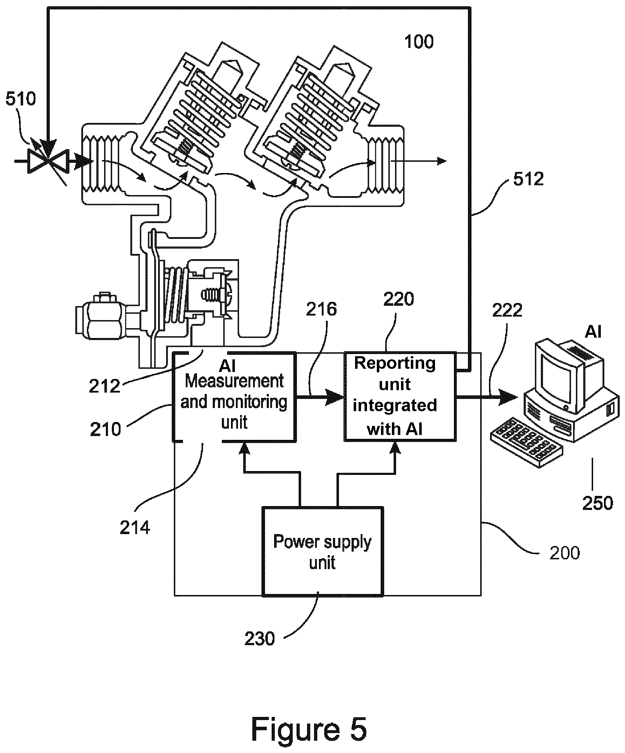

**Fig. 5** illustrates another embodiment of an association of a measurement and monitoring system/device (200) of the invention to a BFP RPZ. As illustrated, the device (200) or system further includes an electrically controlled flow valve (510) positioned at the BFP's water inlet (110). As illustrated, the valve (510) is controlled by the reporting unit (220), which is designed to close it in case a constant, strong flow through the discharge valve (124) is identified. This action will prevent the possible ongoing environmental damage to the soil and the continued waste of large quantities of water in the event of a malfunction. In an alternative embodiment, the valve (510) is controlled by the central monitoring unit (250) (not shown). The valve (510) is designed to be closed also when the water's turbidity exceeds a predefined threshold or due to an increase in the nitrite content/level (which could also increase the water's turbidity) or when the water's quality is lowered below a predefined threshold.

For instance, if the system, while monitoring the water's condition and the level of water turbidity in real-time, identifies a rise in the turbidity or an increase in flow rate or an increase in contaminants/pollutants / (such as chemical hazardous materials or bacteria), it sends a report while simultaneously prevents the continuation of the discharge of water and pollutants from the BFP by closing the valve (510) and thus cutting off the continued supply of water.

Another example is when the system identifies a problem in the water or water flow that is a result of damage to the water infrastructures or water source, e.g., due to an act of war or terror. As a result of identifying such a problem, the system can shut the valve (510) off thereby preventing possible water deprivation, water crisis, etc.

Notably, the issue of water depreciation is of financial importance to the property owner. When there is water depreciation, meaning water is wasted due to a technical fault, the property owner can be exempted from paying for it- provided he/she shows that there was a malfunction and that it was fixed. In the event of a malfunction in the BFP RPZ, large amounts of water could be cumulatively lost over time if the BFP is not fixed. It is important to note that when the property owner is unable to measure the amount of wasted water, he/she cannot request retroactive refunds therefor. Therefore, it is very important to measure the amount of water that passes through the discharge valve (124). The device (200) or system of the present invention has a large measuring range that can measure small and strong flows.

This and more, it is highly important to identify the quality and turbidity of the water discharging from the discharge valve (124). This is because the poor sanitary condition of the BFP can affect the quality of the water. As such, early identification and reporting of the water's quality and turbidity can prevent diseases in the short- and long-term.

In certain embodiments, the measuring and monitoring system/device (200) of the invention further comprises or is associated with various sensors, such as, but not limited to, nitrite-sensor and identifier, temperature sensor, pressure sensor, pH-meter, bacteria sensor, viral sensor, fungal sensor, legionella identifier, and shigella identifier.

Notably, structural details of the invention are shown to provide a fundamental understanding of the invention, the description, taken with the drawings, making apparent to those skilled in the art how the several forms of the invention may be embodied in practice. It is to be understood that the embodiments described hereinabove are cited by way of example, and that the present invention is not limited to what has been particularly shown and described hereinabove. Different system elements described may be altered according to need and additional known elements of similar systems, which are not explicitly mentioned or exemplified herein, may be added without departing from the scope of the invention as defined in the appended claims.

Computer processing elements described may be dedicated and/or distributed processing elements, implemented over wired and/or wireless networks. Such computing systems may furthermore be implemented by multiple alternative and/or cooperative configurations, such as mobile devices, a data center server, or a cloud configuration of processers and data repositories. Processing elements of the system may be implemented in digital electronic circuitry, computer hardware, firmware, software, or in combinations thereof. Such elements can be implemented as a computer program product, tangibly embodied in an information carrier, such as a non-transient, machine-readable storage device, for execution by, or to control the operation of, data processing apparatus, such as a programmable processor, computer, or deployed to be executed on multiple computers at one site or distributed across multiple sites. Memory storage may also include multiple distributed memory units, including one or more types of storage media.

Communications between systems and devices described above are assumed to be performed by software modules and hardware devices known in the art. Processing elements and memory storage, such as databases, may be implemented so as to include security features, such as authentication processes known in the art.

Method steps associated with the system and process can be rearranged and/or one or more such steps can be omitted to achieve the same, or similar, results to those described herein.

## Claims

1. A measuring and monitoring device (200) mounted on a pressure relief valve of a backflow preventer with a reduced pressure zone (BFP RPZ) with an integrated artificial intelligence (AI) sensor for measuring and monitoring water drained from the pressure relief valve for continuous monitoring and reporting on the operation and condition of the pressure relief valve and the BFP RPZ, the device (200) comprises:
(a) a measuring and monitoring unit (210) comprising a flow meter, a water collection tank (315), and a turbidimeter, said flow meter is a rotary encoder (320) comprising a turbine (314) with spoon-shaped blades (316), wherein water discharged from the BFP RPZ is accumulated in the spoon-shaped blades (316) and cause rotation of the turbine (314), such that rotation speed of the turbine (314) is equivalent to the amount and speed of water, and said rotation causes a circular motion that leads to the pouring of the water within the spoon-shaped blades (316) into the collection tank (315) for monitoring;
(b) a reporting unit (220) comprising a processor and a memory;
(c) an artificial intelligence (AI) sensor; and
(d) optionally a power source (230),
wherein said device (200) is designed to:
- be connected to a discharged-water exit (130) of said BFP RPZ to receive water discharged from a discharge valve (124) thereof, and collect said discharged water in said collection tank (315);
- measure the amount and flow rate of the water discharged from the BFP RPZ;
- measure and monitor the discharged water's condition, quality, and turbidity; and
- transmit measured data to said reporting unit (220), which is designed to transmit the same to a remote computer that comprises AI for data analysis, running system tests, and locating failures
wherein the device (200) is mounted on the pressure relief valve of the BFP RPZ, and continuously measures and monitors the water drained from the pressure relief valve thereby enabling continuous monitoring and reporting on the operation and condition of the pressure relief valve and the BFP RPZ.

2. The measuring and monitoring device (200) according to claim 1, wherein said measuring and monitoring unit (210) further comprises an internal subsystem of AI and at least one of: a nitrite-sensor and identifier, temperature sensor, pressure sensor, pH-meter, bacteria sensor, viral sensor, fungal sensor, legionella identifier, and shigella identifier.

3. The measuring and monitoring device (200) according to claim 1 or 2, wherein said collection tank (315) is transparent for enabling turbidity identification using an external turbidimeter.

4. The measuring and monitoring device (200) according to any one of the preceding claims, wherein said reporting unit (220) comprises: (i) two types of memory: an erasable memory (414) used to save intermediate data and results, and a non-erasable memory (412) which stores software executed on the processor and permanent data such as, for example, the unit's identification number or the installation location; optionally (ii) a communication control unit (440) for communicating with a remote computer, near or far; and optionally (iii) a Geographic Information System (GIS).

5. The measuring and monitoring device (200) according to any one of the preceding claims, further comprising a clock (430) associated with said central processor (410) for, as example, measuring time differences.

6. The measuring and monitoring device (200) according to any one of the preceding claims, wherein said reporting unit (220) is further designed to: (i) analyze the data and transmit an analyzed report to said remote computer; and optionally (ii) send out an alert when the analyzed data is indicative of a possible malfunction in the BFP RPZ.

7. The measuring and monitoring device (200) according to any one of the preceding claims, further comprising a GPS unit or an alert mechanism, such as a proximity sensor, designed to send out an alert and a report to said remote computer when the device (200) is disconnected from the BFP RPZ, thereby preventing conversion of the device (200) or its unauthorized dismantling from the BFP RPZ.

8. The measuring and monitoring device (200) according to any one of claims 1-7, further comprising a dedicated attachment mechanism (520), for example a metal band, for connecting said device (200) to said BFP RPZ, wherein said attachment mechanism (520) comprises a GPS unit, or an alert mechanism designed to send out an alert and report with exact location to the remote computer that comprises AI using, for example, email or text message when the device (200) is disconnected from the BFP RPZ or from a Geographic Information System (GIS).

9. The measuring and monitoring device (200) that is integrated with an AI ability according to any one of the preceding claims, wherein said device (200) is further configured to measure and monitor water depreciation from said BFP RPZ.

10. The measuring and monitoring device (200) that is integrated with an AI ability according to any one of the preceding claims, wherein said device (200) further comprises or is associated with an electric valve (510) positioned at the BFP RPZ's water inlet (110), and wherein said device (200) is configured to close said valve (510) when: (i) a constant, strong flow of water from the BFP RPZ is identified; (ii) a malfunction in the BFP RPZ is identified; (iii) water's turbidity exceeds a predefined threshold; (iv) the water's quality is lower than a predefined threshold; or (v) the nitrite level exceeds a predefined threshold.

11. The measuring and monitoring device (200) according to any one of the preceding claims, wherein said device (200) further comprises, as part of its reporting unit (220), or is associated with an artificial intelligence (AI) designed to: analyze a variety of data according to need obtained from the measuring and monitoring unit (210), measuring and monitoring water drained from the pressure relief valve, store information, perform statistical analyses of malfunctions, and identify scenarios, including producing forecasts in real-time, while studying the system.

12. A measurement and monitoring system that is integrated with an artificial intelligence (AI) ability for continuous supervision and reporting on the operation and condition of a backflow preventer with a reduced pressure zone (BFP RPZ), the system comprises:
(a) a measuring and monitoring device (200) according to any one of the preceding claims; and
(b) a central monitoring system (250) that is integrated with an AI ability,
wherein said system is designed to continuously measure, predict, and monitor both water depreciation from said BFP RPZ as well as quality and turbidity of water discharged from said BFP RPZ, thereby providing real-time alert of a possible malfunction in the BFP RPZ, as well as provide a status update for decision-making in an economic and maintenance aspect; and
wherein said AI is designed to: store information, perform statistical analyses of malfunctions, identify scenarios, including producing forecasts in real-time, while studying the system, and analyze data obtained from the measuring and monitoring unit (210).

13. The measuring and monitoring system according to claim 12, further comprising an electric valve (510) positioned at the BFP RPZ's water inlet (110), wherein said system is configured to close said valve (510) when: (i) a constant, strong flow of water from the BFP RPZ is identified; (ii) a malfunction in the BFP RPZ is identified; (iii) water's turbidity exceeds a predefined threshold; or (iv) the water's quality is lower than a predefined threshold.

14. A method for continuously measuring, monitoring, supervising, and reporting on the operation and condition of a backflow preventer with a reduced pressure zone (BFP RPZ), the method comprising the steps of connecting a measuring and monitoring device (200) according to any one of claims 1-13 to a BFP RPZ and activating same,
wherein the device (200) comprises or is associated with an electric valve (510) positioned at the BFP RPZ's water inlet (110), and the method further comprises a step of closing said valve (510) when: (i) a constant, strong flow of water from the BFP RPZ is identified; (ii) a malfunction in the BFP RPZ is identified; (iii) water's turbidity exceeds a predefined threshold; (iv) water's quality is lower than a predefined threshold; or (v) nitrite level exceeds a predefined threshold.

## Patentansprüche

1. Eine Mess- und Überwachungsvorrichtung (200), die an einem Druckbegrenzungsventil eines Rückflussverhinderers mit einer reduzierten Druckzone (BFP RPZ) angebracht ist und einen integrierten Sensor mit künstlicher Intelligenz (AI) zum Messen und Überwachen eines aus dem Druckbegrenzungsventil abgelassenen Wassers umfasst, um den Betrieb und den Zustand des Druckbegrenzungsventils und des BFP RPZ kontinuierlich zu überwachen und zu melden, wobei die Vorrichtung (200) Folgendes umfasst:
(a) eine Mess- und Überwachungseinheit (210) mit einem Durchflussmesser, einem Wassersammeltank (315) und einem Trübungsmesser, wobei der Durchflussmesser ein Drehgeber (320) mit einer Turbine (314) mit löffelförmigen Schaufeln (316) ist, wobei das aus dem BFP RPZ abgegebene Wasser in den löffelförmigen Schaufeln (316) gesammelt wird und eine Drehung der Turbine (314) bewirkt, so dass die Drehzahl der Turbine (314) der Wassermenge und der Wassergeschwindigkeit entspricht, und wobei diese Drehung eine kreisförmige Bewegung bewirkt, die dazu führt, dass das Wasser innerhalb der löffelförmigen Schaufeln (316) zur Überwachung in den Sammeltank (315) gegossen wird;
(b) eine Berichtseinheit (220) mit einem Prozessor und einem Speicher;
(c) einen Sensor für künstliche Intelligenz (AI); und
(d) optional eine Stromquelle (230),
wobei die Vorrichtung (200) so ausgelegt ist, dass sie:
- mit einem Abwasserauslass (130) des BFP RPZ verbunden wird, um Wasser aufzunehmen, das aus einem Auslassventil (124) desselben abfließt, und das abgeflossene Wasser in dem Sammeltank (315) sammelt;
- die Menge und Durchflussrate des aus dem BFP RPZ abgeleiteten Wassers misst;
- den Zustand, die Qualität und die Trübung des abgeleiteten Wassers misst und überwacht; und
- die gemessenen Daten an die Berichtseinheit (220) überträgt, die dazu ausgelegt ist, diese an einen Ferncomputer zu übertragen, der eine AI zur Datenanalyse, zur Durchführung von Systemtests und zur Lokalisierung von Fehlern umfasst,
wobei die Vorrichtung (200) an dem Überdruckventil des BFP RPZ angebracht ist und das aus dem Überdruckventil abgelassene Wasser kontinuierlich misst und überwacht, wodurch eine kontinuierliche Überwachung und Berichterstattung über den Betrieb und den Zustand des Überdruckventils und des BFP RPZ ermöglicht wird.

2. Die Mess- und Überwachungsvorrichtung (200) gemäß Anspruch 1, wobei die Mess- und Überwachungseinheit (210) ferner ein internes Subsystem aus Al und mindestens eines der folgenden Elemente umfasst: einen Nitritsensor und -identifikator, einen Temperatursensor, einen Drucksensor, eine pH-Messvorrichtung, einen Bakteriensensor, einen Virussensor, einen Pilzsensor, einen Legionellenidentifikator und einen Shigellenidentifikator.

3. Die Mess- und Überwachungsvorrichtung (200) nach Anspruch 1 oder 2, wobei der Sammeltank (315) transparent ist, um eine Trübungsidentifizierung mit einer externen Trübungsmessvorrichtung zu ermöglichen.

4. Die Mess- und Überwachungsvorrichtung (200) gemäß einem der vorstehenden Ansprüche, wobei die Berichtseinheit (220) umfasst: (i) zwei Arten von Speicher: einen löschbaren Speicher (414) zum Speichern von Zwischendaten und Ergebnissen und einen nicht löschbaren Speicher (412), der auf dem Prozessor ausgeführte Software und permanente Daten speichert, wie beispielsweise die Identifikationsnummer der Einheit oder den Installationsort; optional (ii) eine Kommunikationssteuereinheit (440) zur Kommunikation mit einem nahen oder entfernten Ferncomputer; und optional (iii) ein geografisches Informationssystem (GIS).

5. Die Mess- und Überwachungsvorrichtung (200) nach einem der vorstehenden Ansprüche, die ferner eine mit dem Zentralprozessor (410) verbundene Uhr (430) umfasst, um beispielsweise Zeitdifferenzen zu messen.

6. Die Mess- und Überwachungsvorrichtung (200) nach einem der vorstehenden Ansprüche, wobei die Berichtseinheit (220) ferner dazu ausgelegt ist, (i) die Daten zu analysieren und einen analysierten Bericht an den Ferncomputer zu übertragen; und optional (ii) eine Warnung auszugeben, wenn die analysierten Daten auf eine mögliche Fehlfunktion im BFP RPZ hinweisen.

7. Die Mess- und Überwachungsvorrichtung (200) nach einem der vorstehenden Ansprüche, die ferner eine GPS-Einheit oder einen Alarmmechanismus, wie beispielsweise einen Näherungssensor, umfasst, die oder der so ausgelegt ist, dass sie oder er einen Alarm und einen Bericht an den Ferncomputer sendet, wenn die Vorrichtung (200) vom BFP RPZ getrennt wird, wodurch eine Umwandlung der Vorrichtung (200) oder deren unbefugte Demontage vom BFP RPZ verhindert wird.

8. Die Mess- und Überwachungsvorrichtung (200) gemäß einem der Ansprüche 1 bis 7, die ferner einen dafür vorgesehenen Befestigungsmechanismus (520), beispielsweise ein Metallband, zum Verbinden der Vorrichtung (200) mit dem BFP RPZ umfasst, wobei der Befestigungsmechanismus (520) eine GPS-Einheit oder einen Alarmmechanismus umfasst, die oder der so ausgelegt ist, dass sie oder er einen Alarm und einen Bericht mit dem genauen Standort an den Ferncomputer sendet, der Al umfasst, beispielsweise unter Verwendung einer E-Mail oder Textnachricht, wenn die Vorrichtung (200) vom BFP RPZ oder von einem geografischen Informationssystem (GIS) getrennt wird.

9. Die Mess- und Überwachungsvorrichtung (200), die gemäß einem der vorstehenden Ansprüche mit einer Al-Fähigkeit integriert ist, wobei die Vorrichtung (200) ferner so konfiguriert ist, dass es den Wasserverlust aus dem BFP RPZ misst und überwacht.

10. Die Mess- und Überwachungsvorrichtung (200), die mit einer Al-Fähigkeit gemäß einem der vorstehenden Ansprüche integriert ist, wobei die Vorrichtung (200) ferner ein elektrisches Ventil (510) umfasst oder mit diesem assoziiert ist, das am Wassereinlass (110) des BFP RPZ positioniert ist, und wobei die Vorrichtung (200) so konfiguriert ist, dass sie das Ventil (510) schließt, wenn: (i) ein konstanter, starker Wasserfluss aus dem BFP RPZ festgestellt wird; (ii) eine Fehlfunktion im BFP RPZ festgestellt wird; (iii) die Trübung des Wassers einen vordefinierten Schwellenwert überschreitet; (iv) die Wasserqualität unter einem vordefinierten Schwellenwert liegt; oder (v) der Nitritgehalt einen vordefinierten Schwellenwert überschreitet.

11. Die Mess- und Überwachungsvorrichtung (200) gemäß einem der vorstehenden Ansprüche, wobei die Vorrichtung (200) ferner als Teil seiner Berichtseinheit (220) eine künstliche Intelligenz (AI) umfasst oder mit einer solchen assoziiert ist, die dazu ausgelegt ist, eine Vielzahl von Daten entsprechend dem Bedarf zu analysieren, die von der Mess- und Überwachungseinheit (210) erhalten wurden, das aus dem Druckbegrenzungsventil abgelassene Wasser zu messen und zu überwachen, Informationen zu speichern, statistische Analysen von Fehlfunktionen durchzuführen und Szenarien zu identifizieren, einschließlich der Erstellung von Prognosen in Echtzeit, während das System untersucht wird.

12. Ein Mess- und Überwachungssystem, das mit einer künstlichen Intelligenz (AI) zur kontinuierlichen Überwachung und Berichterstattung über den Betrieb und den Zustand eines Rückflussverhinderers mit einer reduzierten Druckzone (BFP RPZ) integriert ist, wobei das System umfasst:
(a) eine Mess- und Überwachungsvorrichtung (200) gemäß einem der vorstehenden Ansprüche; und
(b) ein zentrales Überwachungssystem (250), das mit einer Al-Fähigkeit integriert ist,
wobei das System so ausgelegt ist, dass es sowohl den Wasserverlust aus dem BFP RPZ als auch die Qualität und Trübung des aus dem BFP RPZ abgeleiteten Wassers kontinuierlich misst, vorhersagt und überwacht, wodurch eine Echtzeitwarnung vor einer möglichen Fehlfunktion im BFP RPZ bereitgestellt wird und eine Statusaktualisierung für die Entscheidungsfindung in wirtschaftlicher und wartungstechnischer Hinsicht bereitgestellt wird; und
wobei die AI dazu ausgelegt ist, Informationen zu speichern, statistische Analysen von Fehlfunktionen durchzuführen, Szenarien zu identifizieren, einschließlich der Erstellung von Prognosen in Echtzeit, während das System untersucht wird, und Daten zu analysieren, die von der Mess- und Überwachungseinheit (210) erhalten wurden.

13. Das Mess- und Überwachungssystem gemäß Anspruch 12, ferner umfassend ein elektrisches Ventil (510), das am Wassereinlass (110) des BFP RPZ positioniert ist, wobei das System so konfiguriert ist, dass es das Ventil (510) schließt, wenn: (i) ein konstanter, starker Wasserfluss aus dem BFP RPZ identifiziert wird; (ii) eine Fehlfunktion im BFP RPZ identifiziert wird; (iii) die Trübung des Wassers einen vordefinierten Schwellenwert überschreitet; oder (iv) die Wasserqualität unter einem vordefinierten Schwellenwert liegt.

14. Verfahren zum kontinuierlichen Messen, Überwachen, Kontrollieren und Melden des Betriebs und des Zustands eines Rückflussverhinderers mit einer reduzierten Druckzone (BFP RPZ), wobei das Verfahren die Schritte umfasst, eine Mess- und Überwachungsvorrichtung (200) gemäß einem der Ansprüche 1 bis 13 an einen BFP RPZ anzuschließen und diese zu aktivieren,
wobei die Vorrichtung (200) ein elektrisches Ventil (510) umfasst oder mit diesem assoziiert ist, das am Wassereinlass (110) des BFP RPZ positioniert ist, und das Verfahren ferner einen Schritt des Schließens des Ventils (510) umfasst, wenn: (i) ein konstanter, starker Wasserfluss aus dem BFP RPZ festgestellt wird; (ii) eine Fehlfunktion im BFP RPZ festgestellt wird; (iii) die Trübung des Wassers einen vordefinierten Schwellenwert überschreitet; (iv) die Wasserqualität unter einem vordefinierten Schwellenwert liegt; oder (v) der Nitritgehalt einen vordefinierten Schwellenwert überschreitet.

## Revendications

1. Dispositif de mesure et de surveillance (200), monté sur une vanne de décompression d'un dispositif anti-refoulement doté d'une zone de pression réduite (BFP RPZ), doté d'un capteur à intelligence artificielle (IA) intégré pour la mesure et la surveillance d'eau drainée à partir de la vanne de décompression pour une surveillance et une délivrance de rapports en continu sur le fonctionnement et l'état de la vanne de décompression et du BFP RPZ, le dispositif (200) comprend :
(a) une unité de mesure et de surveillance (210) comprenant un débitmètre, un réservoir de collecte d'eau (315), et un turbidimètre, ledit débitmètre est un codeur rotatif (320) comprenant une turbine (314) dotée d'aubes en forme de cuillère (316), dans lequel l'eau évacuée du BFP RPZ s'accumule dans les aubes en forme de cuillère (316) et provoque une rotation de la turbine (314), de sorte que la vitesse de rotation de la turbine (314) soit équivalente à la quantité et à la vitesse de l'eau, et ladite rotation provoque un mouvement circulaire qui aboutit au déversement de l'eau au sein des aubes en forme de cuillère (316) dans le réservoir de collecte (315) pour une surveillance ;
(b) une unité de délivrance de rapports (220) comprenant un processeur et une mémoire ;
(c) un capteur à intelligence artificielle (IA) ; et
(d) facultativement une source d'électricité (230),
dans lequel ledit dispositif (200) est conçu pour :
- être raccordé à une sortie d'eau évacuée (130) dudit BFP RPZ pour recevoir de l'eau évacuée d'une vanne d'évacuation (124) de celui-ci, et collecter ladite eau évacuée dans ledit réservoir de collecte (315) ;
- mesurer la quantité et le débit de l'eau évacuée du BFP RPZ ;
- mesurer et surveiller l'état, la qualité et la turbidité de l'eau évacuée ; et
- transmettre des données mesurées à ladite unité de délivrance de rapports (220), qui est conçue pour les transmettre à un ordinateur distant qui comprend une IA pour une analyse de données, l'exécution de tests système et la localisation de pannes
dans lequel le dispositif (200) est monté sur la vanne de décompression du BFP RPZ, et mesure et surveille en continu l'eau drainée à partir de la vanne de décompression, ce qui permet une surveillance et une délivrance de rapports en continu sur le fonctionnement et l'état de la vanne de décompression et du BFP RPZ.

2. Dispositif de mesure et de surveillance (200) selon la revendication 1, dans lequel ladite unité de mesure et de surveillance (210) comprend en outre un sous-système interne d'lA et au moins l'un parmi : un capteur et identificateur de nitrites, un capteur de température, un capteur de pression, un pH-mètre, un capteur de bactéries, un capteur viral, un capteur fongique, un identificateur de légionelles et un identificateur de shigelles.

3. Dispositif de mesure et de surveillance (200) selon la revendication 1 ou 2, dans lequel ledit réservoir de collecte (315) est transparent pour permettre une identification de turbidité à l'aide d'un turbidimètre externe.

4. Dispositif de mesure et de surveillance (200) selon l'une quelconque des revendications précédentes, dans lequel ladite unité de délivrance de rapports (220) comprend : (i) deux types de mémoire : une mémoire effaçable (414) utilisée pour sauvegarder des données et résultats intermédiaires, et une mémoire non effaçable (412) qui stocke un logiciel exécuté sur le processeur et des données permanentes telles que, par exemple, le numéro d'identification de l'unité ou l'emplacement d'installation ; facultativement (ii) une unité de commande de communication (440) pour une communication avec un ordinateur distant, proche ou éloigné ; et facultativement (iii) un système d'informations géographiques (GIS).

5. Dispositif de mesure et de surveillance (200) selon l'une quelconque des revendications précédentes, comprenant en outre une horloge (430) associée audit processeur central (410) pour, à titre d'exemple, la mesure de différences de temps.

6. Dispositif de mesure et de surveillance (200) selon l'une quelconque des revendications précédentes, dans lequel ladite unité de délivrance de rapports (220) est en outre conçue pour : (i) analyser les données et transmettre un rapport analysé audit ordinateur distant ; et facultativement (ii) envoyer une alerte lorsque les données analysées sont indicatives d'un possible dysfonctionnement dans le BFP RPZ.

7. Dispositif de mesure et de surveillance (200) selon l'une quelconque des revendications précédentes, comprenant en outre une unité GPS ou un mécanisme d'alerte, tel qu'un capteur de proximité, conçu pour envoyer une alerte et un rapport audit ordinateur distant lorsque le dispositif (200) est déconnecté du BFP RPZ, ce qui empêche la conversion du dispositif (200) ou son démontage non autorisé à partir du BFP RPZ.

8. Dispositif de mesure et de surveillance (200) selon l'une quelconque des revendications 1 à 7, comprenant en outre un mécanisme de fixation (520) dédié, par exemple une bande métallique, pour le raccordement dudit appareil (200) audit BFP RPZ, dans lequel ledit mécanisme de fixation (520) comprend une unité GPS, ou un mécanisme d'alerte conçu pour envoyer une alerte et un rapport avec emplacement exact à l'ordinateur distant qui comprend une IA à l'aide, par exemple, d'un courriel ou d'un message textuel lorsque le dispositif (200) est déconnecté du BFP RPZ ou d'un système d'informations géographiques (GIS).

9. Dispositif de mesure et de surveillance (200) dans lequel est intégré une capacité d'lA selon l'une quelconque des revendications précédentes, dans lequel ledit dispositif (200) est en outre configuré pour mesurer et surveiller une perte d'eau dudit BFP RPZ.

10. Dispositif de mesure et de surveillance (200) dans lequel est intégré une capacité d'lA selon l'une quelconque des revendications précédentes, dans lequel ledit dispositif (200) comprend en outre ou est associé à une vanne électrique (510) positionnée au niveau de l'entrée d'eau (110) du BFP RPZ, et dans lequel ledit dispositif (200) est configuré pour fermer ladite vanne (510) lorsque : (i) un écoulement d'eau fort et constant provenant du BFP RPZ est identifié ; (ii) un dysfonctionnement dans le BFP RPZ est identifié ; (iii) la turbidité de l'eau dépasse un seuil prédéfini ; (iv) la qualité de l'eau est inférieure à un seuil prédéfini ; ou (v) le niveau de nitrites dépasse un seuil prédéfini.

11. Dispositif de mesure et de surveillance (200) selon l'une quelconque des revendications précédentes, dans lequel ledit dispositif (200) comprend en outre, faisant partie de son unité de délivrance de rapports (220), ou est associé à une intelligence artificielle (IA) conçue pour : analyser une variété de données selon les besoins obtenues auprès de l'unité de mesure et de surveillance (210), mesurer et surveiller l'eau drainée à partir de la vanne de décompression, stocker des informations, réaliser des analyses statistiques de dysfonctionnements, et identifier des scénarios, y compris produire des prévisions en temps réel, tout en étudiant le système.

12. Système de mesure et de surveillance dans lequel est intégré une capacité d'intelligence artificielle (IA) pour une supervision et une délivrance de rapports en continu sur le fonctionnement et l'état d'un dispositif anti-refoulement doté d'une zone de pression réduite (BFP RPZ), le système comprend :
(a) un dispositif de mesure et de surveillance (200) selon l'une quelconque des revendications précédentes ; et
(b) un système de surveillance central (250) dans lequel est intégré une capacité d'IA,
dans lequel ledit système est conçu pour mesurer, prévoir et surveiller en continu à la fois une perte d'eau dudit BFP RPZ ainsi que la qualité et la turbidité de l'eau évacuée dudit BFP RPZ, ce qui fournit une alerte en temps réel d'un possible dysfonctionnement dans le BFP RPZ, ainsi que pour fournir une mise à jour de statut pour une prise de décision dans un contexte économique et de maintenance ; et
dans lequel ladite IA est conçue pour : stocker des informations, réaliser des analyses statistiques de dysfonctionnements, identifier des scénarios, y compris produire des prévisions en temps réel, tout en étudiant le système, et analyser des données obtenues auprès de l'unité de mesure et de surveillance (210).

13. Système de mesure et surveillance selon la revendication 12, comprenant en outre une vanne électrique (510) positionnée au niveau de l'entrée d'eau (110) du BFP RPZ, dans lequel ledit système est configuré pour fermer ladite vanne (510) lorsque : (i) un écoulement d'eau fort et constant provenant du BFP RPZ est identifié ; (ii) un dysfonctionnement dans le BFP RPZ est identifié ; (iii) la turbidité de l'eau dépasse un seuil prédéfini ; ou (iv) la qualité de l'eau est inférieure à un seuil prédéfini.

14. Procédé pour la mesure, la surveillance, la supervision et la délivrance de rapports en continu sur le fonctionnement et l'état d'un dispositif anti-refoulement doté d'une zone de pression réduite (BFP RPZ), le procédé comprenant les étapes consistant à raccorder un dispositif de mesure et de surveillance (200) selon l'une quelconque des revendications 1 à 13 à un BFP RPZ et à l'activer,
dans lequel le dispositif (200) comprend ou est associé à une vanne électrique (510) positionnée au niveau de l'entrée d'eau (110) du BFP RPZ, et le procédé comprend en outre une étape consistant à fermer ladite vanne (510) lorsque : (i) un écoulement d'eau fort et constant provenant du BFP RPZ est identifié ; (ii) un dysfonctionnement dans le BFP RPZ est identifié ; (iii) la turbidité de l'eau dépasse un seuil prédéfini ; (iv) la qualité de l'eau est inférieure à un seuil prédéfini ; ou (v) le niveau de nitrites dépasse un seuil prédéfini.
